# EUROPEAN PATENT SPECIFICATION

(11) **EP 0 318 438 B1**
(45) Date of publication and mention of the grant of the patent: **17.03.1993**
(21) Application number: 88830485.4
(22) Date of filing: 15.11.1988
(51) Int. Cl.: B62D 33/06

(54) **Suspension device for tilting cabs of commercial vehicles**
Lagervorrichtung für kippbare Fahrerkabinen von Nutzfahrzeugen
Dispositif de suspension pour cabines basculantes de camions commerciaux

(30) Priority: 26.11.1987 IT 5383987 U
(43) Date of publication of application: 31.05.1989
(73) Proprietor: IVECO FIAT S.p.A., 10156 Torino (IT)
(72) Inventor: Rolfo, Gian Piero, I-10095 Grugliasco (Torino) (IT)
(74) Representative: Quinterno, Giuseppe

(56) References cited:
- EP-A- 0 095 633
- DE-A- 1 906 337
- FR-A- 2 205 036
- PATENT ABSTRACTS OF JAPAN, vol. 7, no. 265 (M-258)[1410], 25th November 1983; & JP-A-58 145 579 (HINO JIDOSHA KOGYO K.K.) 30-08-1983
- TECHNICAL PAPER SERIES, Detroit, 27th February-3rd March 1978, no. 780409, pages 1-8, Society of Automotive Engineers, Inc., Warrendale, Pennsylvania, US; A.A. SELMAN et al.: "A cab suspension for transcontinental operation"

## Description

The present invention relates to a suspension device for a commercial vehicle cab which is supported by a support structure so that it can be tilted about a tilting axis transverse the longitudinal axis of the vehicle.

In particular, the invention is directed to a suspension device of the type defined in the pre-characterising portion of claim 1, and generally known from prior art document Technical Paper Series, Detroit, 27th February - 3rd March 1978, No. 780 049, pages 1 - 8, Society of Automotive Engineers, Inc., Warrendale, Pennsylvania, US; A.A. Selman et al: "A cab suspension for transcontinental operation".

In this known construction each of the two shock-absorbers is interposed between the bottom of the cab and an appendage of the respective longitudinal pivoting arm extending forwardly with respect to the cab tilting axis and each helical spring reacts against the respective longitudinal pivoting arm above the tilting axis. The device is thus entirely housed between the support structure of the vehicle and the bottom of the cab, which needs to be correspondingly recessed. Moreover mounting, maintenance and repair of the suspension components can raise problems owing to access difficulty.

The object of the present invention is to provide a device of the above type ensuring easier mounting and greater modularity of production, still enabling substantial reduction in the stresses on the shock-absorber elements of the suspension during tilting of the cab.

This object is achieved by virtue of the features set forth in the characterising portion of Claim 1.

By virtue of these characteristics, the suspension device according to the invention can be assembled and completely connected to the cab at the upholstery stage, enabling subsequent assembly of the cab on the chassis of the vehicle to be made considerably easier, assembly being carried out by means of a simple frontal connection of the support elements of the device to the longitudinal side members of the vehicle.

Moreover, the particular construction of the device according to the invention does not allow the stroke of the shock-absorber members, normally constituted by a pair of telescopic shock-absorbers, to vary so that they are not stressed during the stage of tilting of the cab; it has in fact been noted that, in currently produced suspension devices, the telescopic shock-absorbers may be stressed considerably during tilting, with an appreciable reduction in their life.

Further advantages and characteristics of the device according to the invention will become clear from the following detailed description, provided purely by way of non-limiting example, with reference to the appended drawings, in which:

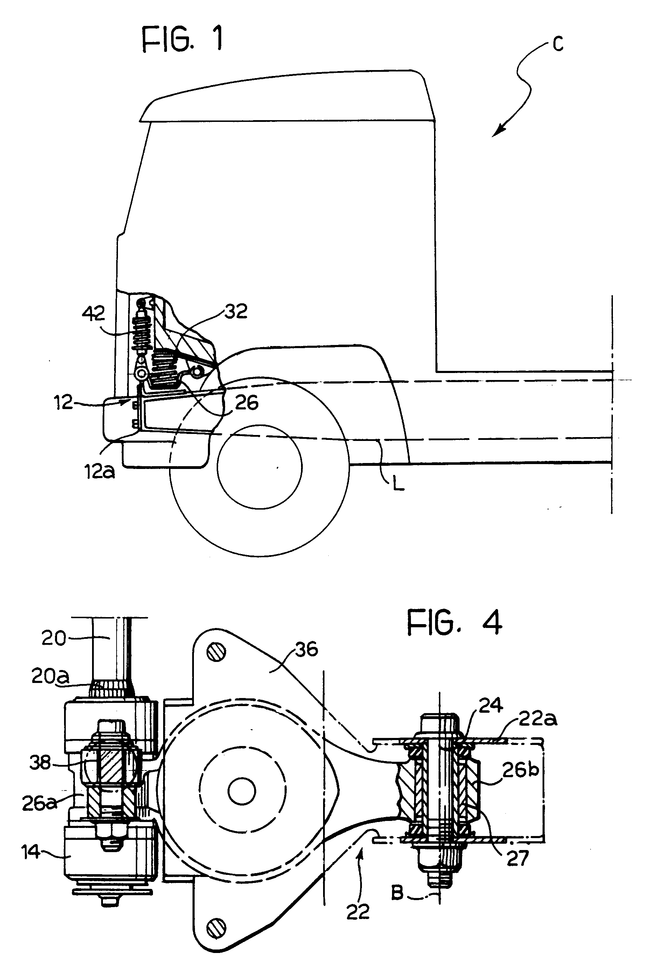

Figure 1 is a partially-sectioned schematic side view which shows a commercial vehicle provided with a device according to the invention,

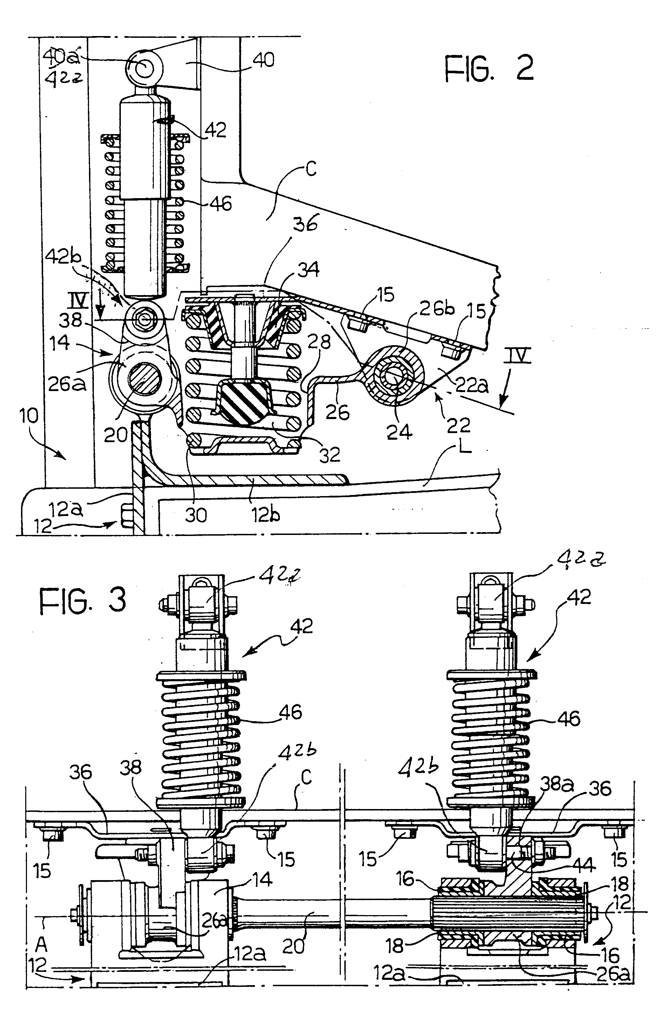

Figure 2 is a detail of Figure 1 on an enlarged scale,
Figure 3 is a view taken on the arrow III of Figure 1, and
Figure 4 is a section taken on the line IV-IV of Figure 2.

With reference to the drawings, the cab of a commercial vehicle is schematically indicated C and is supported by two spaced-apart side members L, forming part of the load-bearing structure of the vehicle, for partial tilting about a transverse horizontal axis A.

A suspension device, generally indicated 10, is interposed between the side members L of the structure of the vehicle and the tilting cab C. This device includes two supports 12, each having a front anchoring plate 12a and a portion 12b bearing on the corresponding side member L. Each support 12 has an upper forked appendage 14 into which is inserted, with the interposition of vibration-damping bushes 16 of elastomeric material and auxiliary bushes 18, a splined end 20a of a transverse torsion bar 20 arranged coaxially with the tilting axis A.

Two attachment elements 22, having portions 22a of substantially U-shaped cross-section, are fixed at 15 to the floor of the cab C. An articulation pin 24 with an axis B parallel to the tilting axis A is fixed to each attachment element 22.

A pair of shaped pivoting arms 26 are arranged between the torsion bar 20 and the articulation pins 24 and each has a first end 26a keyed to the torsion bar 20 and a second end 26b articulated to the articulation pin 24 with the interposition of vibration-damping bushes 27. In a central position, each arm 26 also has a recessed seat 28 adapted partially to house a helical spring 30 interposed between the arm 26 and the structure of the cab C. Rubber travel-limit buffers 32 and rubber annular elements 34 are also associated with the helical spring 30 for further damping of sudden movements from the road. A shaped bearing plate 36 formed integrally with the attachment element 22 is interposed between each helical spring 30 and the structure of the cab C.

The end 26a of each pivoting arm 26 is further provided with a lever-like portion 38 arranged vertically and provided with a through-hole 38a. The structure of the cab C has a pair of brackets 40 at the front, provided with through-holes 40a with transverse axes. Between the brackets 40 and the portions 38 of the pivoting arms 26 are interposed two telescopic hydraulic shock-absorbers 42, each having a first end 42a articulated to the bracket 40 and a second end 42b articulated to the portion 38 of the respective pivoting arm 26 by means of a pin 44. Coaxial springs 46 are associated with the telescopic shock-absorbers 42 for cooperation with the helical springs 30 for the resilient suspension of the cab C.

The suspension device 10 is mounted on the cab C and it then suffices to provide for the fixing of the plates 12a of the supports 12 to the side members L to make the cab C fast with the vehicle.

During normal operation, the cab C pivots about the axis B of rotation of the pivoting arms 26 relative to the attachment elements 22. Oscillation about the axis B caused by unevenness of the road stresses both the helical springs 30 and the shock-absorbers 42 which are able to rotate by small amounts in correspondence with the brackets 40 and the portions 38 of the pivoting arms 26 respectively.

When the cab C is tilted about the tilting axis 20, for example, by means of a hydraulic tilting cylinder interposed between the cab and the vehicle at the side of the latter, the whole cab C pivots about the horizontal axis A without causing any variation in the load on the telescopic shock-absorber 42, since the distance between the axes of the holes 40a and 38a remains completely unchanged during pivoting. The presence of the torsion bar 20, as well as having an anti-roll function, enables the transmission of forces to the part of the cab C which is not driven directly by the lateral hydraulic tilting cylinder, enabling the avoidance of high torsional stresses on the cab C.

The particular frontal arrangement of the telescopic shock-absorbers 42 facilitates maintenance operations. Furthermore, the particularly easy access to the shock-absorbers 42 enables the coaxial springs 46 to be replaced easily in dependence on the type of load bearing on the cab C.

## Claims

1. A suspension device for a commercial vehicle cab which is supported by a support structure so that it can be tilted about a tilting axis (A) transverse the longitudinal axis of the vehicle, including:
- a pair of support elements (12) fixed at the front to the structure (L) of the vehicle in spaced-apart positions,
- a pair of attachment elements (22, 36) adapted to be fixed to the lower part of the cab (C) in spaced-apart positions,
- a pair of longitudinal pivoting arms (26) rotatably connected to the said support elements (12) about the said tilting axis (A) and having rear ends (26b) articulated to the attachment elements (22) about a pivoting axis (B) substantially parallel to the tilting axis (A),
- a pair of helical springs (30) interposed between the pivoting longitudinal arms (26) and the lower part of the cab (C), and
- two shock-absorbers (42) interposed between the cab and the front ends (26a) of the pivoting arms (26), the upper and lower articulated ends (42a, 42b) thereof being aligned substantially vertically with the said transverse bar (20), characterised in that:
- the front ends (26a) of the two longitudinal pivoting arms (26) are keyed to a transverse bar (20) mounted rotatably in the said support elements (11, 12) coaxially with the tilting axis (A), which axis (A) is placed forward to the front end of the cab (C),
- each longitudinal pivoting arm (26) has a seat (28) partially housing the respective suspension spring, said seat being formed centrally between the said tilting axis (A) and the said pivoting axis (B) at a lower level relative thereto,
- each shock-absorber (42) is arranged forward to the front end of the vehicle cab (C) and its upper end (42a) being articulated to a bracket (40) fixed to the front end of the cab (C) and its lower end (42b) being articulated to a lever portion (38) of the respective longitudinal pivoting arm (26) protruding upwardly,

2. A device according to Claim 1, characterised in that each support element (12) has a first portion (12a) adapted to be fixed removably to the front end of a longitudinal side member (L) of the vehicle and a fork-shaped second portion (14) defining two arms between which the front end (26a) of the corresponding pivoting arm (26) is interposed.

## Patentansprüche

1. Aufhängungsvorrichtung für eine Nutzfahrzeug-Fahrerkabine, die dergestalt von einer Tragkonstruktion getragen wird, daß sie sich um eine in Querrichtung zur Längsachse des Fahrzeugs verlaufende Kippachse (A) kippen läßt, mit
- einem Paar Tragelemente (12), die mit Zwischenraum angeordnet vorne am Rahmen (L) des Fahrzeugs befestigt sind,
- einem Paar Befestigungselemente (22, 36), die so ausgebildet sind, daß sie sich mit Zwischenraum angeordnet am unteren Teil der Fahrerkabine (C) befestigen lassen,
- einem Paar in Längsrichtung verlaufender Schwenkarme (26), die mit den Tragelementen (12) um die Kippachse (A) drehbar verbunden sind und Hinterenden (26b) aufweisen, die gelenkig und um eine im wesentlichen zu der Kippachse (A) parallelen Schwenkachse (B) drehbar mit den Befestigunselementen (22) verbunden sind,
- ein Paar Schraubenfedern (30), die zwischen den in Längsrichtung verlaufenden Schwenkarmen (26) und dem unteren Teil der Fahrerkabine (C) angebracht sind, sowie
- zwei Stoßdämpfern (42), die zwischen der Fahrerkabine (C) und den Vorderenden (26a) der Schwenkarme (26) angebracht sind, und mit ihrem oberen und unteren gelenkig verbundenen Ende (42a, 42b) so ausgerichtet sind, daß sie im wesentlichen zu einem Querstab (20) senkrecht verlaufen,
dadurch gekennzeichnet,
daß
- die Vorderenden (26a) der beiden in Längsrichtung verlaufenden Schwenkarme (26) mit dem Querstab (20) verbungen sind, der drehbar an den Tragelementen (11, 12) und koaxial mit der Kippachse (A) angebracht ist, die vor dem vorderen Ende der Fahrerkabine (C) angeordnet ist,
- jeder der in Längsrichtung verlaufenden Schwenkarme (26) eine Aufnahme (28) aufweist, die zum Teil die jeweilige Schraubenfeder aufnimmt, wobei die Aufnahme (28) unterhalb und in der Mitte zwischen der Kippachse (A) und der Schwenkachse (B) ausgebildet ist,
- jeder der Stoßdämpfer (42) vor dem vorderen Ende der Fahrerkabine (C) des Fahrzeugs angeordnet ist, sein oberes Ende (42a) gelenkig mit einem an dem vorderen Ende der Fahrerkabine (C) befestigten Träger (40) verbunden ist, und sein unteres Ende (42b) gelenkig mit einem nach oben ragenden Hebelabschnitt (38) des jeweiligen in Längsrichtung verlaufenden Schwenkarms (26) verbunden ist.

2. Vorrichtung nach Anspruch 1, dadurch gekennzeichnet, daß jedes Tragelement (12) einen ersten Abschnitt (12a), der so ausgebildet ist, daß er sich abnehmbar an dem vorderen Ende eines Längsträgers (L) des Fahrzeugrahmens befestigen läßt, und eine gabelförmigen zweiten Abschnitt (14) mit zwei Armen, zwischen denen das Vorderende (26a) des jeweiligen Schwenkarms (26) angebracht ist, aufweist.

## Revendications

1. Dispositif de suspension pour cabine de véhicule commercial portée par une structure support de manière à pouvoir être basculée autour d'un axe de basculement (A) transversal par rapport à l'axe longitudinal du véhicule, comportant :
- une paire d'éléments supports (12) fixés à la partie frontale de la structure (L) du véhicule et espacé l'un par rapport à l'autre ;
- une paire d'éléments d'attache (22, 36) adaptés pour être fixés à la partie inférieure de la cabine (C) et espacé l'un par rapport à l'autre ;
- une paire de bras pivotant longitudinaux (26) connectés en rotation audit élément support (12) autour dudit axe de basculement (A) et ayant des extrémités arrière (26b) articulées aux éléments d'attache (22) autour d'un axe de pivotement (B) sensiblement parallèle à l'axe de basculement (A) ;
- une paire de ressorts à boudin (30) interposés entre les bras longitudinaux pivotants (26) et la partie inférieure de la cabine (C) ; et
- deux amortisseurs (42) interposés entre la cabine et les extrémités frontales (26a) des bras pivotants (26), les extrémités articulées supérieure et inférieure (42a, 42b) de ceux-ci étant alignées sensiblement dans une direction verticale avec une barre transversale (20) ;
caractérisé en ce que
- les extrémités frontales (26a) des deux bras pivotants longitudinaux (26) sont clavetées à ladite barre transversale (20) montée en rotation sur lesdits éléments supports (11, 12) et sont coaxiaux à l'axe de basculement (A), celui-ci étant disposé à l'avant de l'extrémité frontale de la cabine (C) ;
- chaque arbre pivotant longitudinal (26) comporte un siège (28) qui loge partiellement un ressort de suspension respectif, ledit siège étant formé en position centrale entre ledit axe de basculement (A) et ledit axe de pivotement (B) à un niveau inférieur par rapport à celui-ci ;
- chaque amortisseur (42) étant disposé à l'avant par rapport à l'extrémité frontale de la cabine du véhicule (C), son extrémité supérieure (42a) étant articulée à la console (40) fixée à l'extrémité frontale de la cabine (C) et son extrémité inférieure (42b) étant articulée à une partie faisant levier (38) de l'arbre (26) de pivotement longitudinal respectif en saillie vers le haut.

2. Dispositif selon la revendication 1, caractérisé en ce que chaque élément support (12) comporte une première partie (12a) adaptée pour être fixée de façon amovible à l'extrémité frontale d'un élément latéral longitudinal (L) du véhicule et une deuxième partie en forme de fourche (14) définissant deux bras entre lesquels est interposée l'extrémité frontale (26a) du bras pivotant correspondant (26).
